# EUROPÄISCHE PATENTSCHRIFT

(11) **EP 4 013 661 B1**
(45) Veröffentlichungstag und Bekanntmachung des Hinweises auf die Patenterteilung: **06.09.2023**
(21) Anmeldenummer: 20743585.0
(22) Anmeldetag: 15.07.2020
(51) Int. Cl.: B61L 25/02, B61L 3/06, B66C 13/18, B66F 9/075

(54) **SYSTEM, INSBESONDERE ANLAGE, MIT ENTLANG EINES CODIERBEREICHS VERFAHRBAREM MOBILTEIL UND VERFAHREN ZUM BETREIBEN EINES SOLCHEN SYSTEMS**
SYSTEM, IN PARTICULAR AN INSTALLATION, COMPRISING A MOBILE PART WHICH CAN MOVE ALONG A CODING REGION, AND METHOD FOR OPERATING SUCH A SYSTEM
SYSTÈME, EN PARTICULIER INSTALLATION, COMPRENANT UNE PARTIE MOBILE POUVANT SE DÉPLACER LE LONG D'UNE RÉGION DE CODAGE, ET PROCÉDÉ DE FONCTIONNEMENT D'UN TEL SYSTÈME

(30) Priorität: 13.08.2019 DE 102019005669
(43) Veröffentlichungstag der Anmeldung: 22.06.2022
(73) Patentinhaber: SEW-EURODRIVE GmbH & Co. KG, 76646 Bruchsal (DE)
(72) Erfinder: ERB, Frank, 76137 Karlsruhe (DE)
(86) Internationale Anmeldenummer: PCT/EP2020/025334
(87) Internationale Veröffentlichungsnummer: WO 2021/028069

(56) Entgegenhaltungen:
- EP-A1- 3 035 002
- DE-A1-102017 009 075
- DE-U1-202007 012 798

## Beschreibung

Die Erfindung betrifft ein System, insbesondere Anlage, mit entlang eines Codierbereichs verfahrbarem Mobilteil und ein Verfahren zum Betreiben eines solchen Systems.

Es ist allgemein bekannt, dass ein als Schienenfahrzeug ausgeführtes Mobilteil in Schienenrichtung verfahrbar ist.

**Aus der** EP 2 037 228 A1 **ist ein Verfahren zum Bestimmen eines Wartungsintervalls eines Fahrzeugs bekannt.**

**Aus der** DE 199 10 933 A1 **ist eine Vorrichtung zur Positionierung eines Fahrzeugs bekannt.**

**Aus der** DE 10 2004 018 404 A1 **ist eine optoelektronische Vorrichtung bekannt.**

**Aus der** US 2018 / 0 209 823 A1 **ist ein Verfahren zum vertrauenswürdigen Bestimmen der Position eines Objekts bekannt.**

**Aus der** DE 20 2007 012798 U1 **ist als nächstliegender Stand der Technik ein Positioniersystem bekannt.**

**Aus der** EP 3 035 002 A1 **ist ein robuster optischer Codierer bekannt.**

**Aus der** DE 10 2017 009075 A1 **ist ein Schienensystem bekannt.**

Der Erfindung liegt daher die Aufgabe zugrunde, ein System mit verbesserter Sicherheit weiterzubilden.

Erfindungsgemäß wird die Aufgabe bei dem System nach den in **Anspruch 1** und bei dem Verfahren nach den in **Anspruch 10** angegebenen Merkmalen gelöst.

Wichtige Merkmale der Erfindung bei dem System, insbesondere Anlage, mit entlang eines Codierbereichs verfahrbarem Mobilteil, sind, dass am Mobilteil eine Kamera angeordnet ist, die mit einer Auswerteeinheit, insbesondere Bildauswerteeinheit, des Mobilteils verbunden ist,
wobei der Codierbereich, insbesondere in Fahrrichtung des Mobilteils, hintereinander angeordnete, insbesondere regelmäßig und/oder gleichmäßig voneinander beabstandete Codierungen aufweist,
wobei eine einteilig oder mehrteilig ausgeführte Abdeckung Codierungen, insbesondere zur ersten Codierung benachbarte Codierungen, abdeckt, insbesondere zur Kamera hin abdeckt,
wobei die Abdeckung eine Ausnehmung aufweist, durch welche hindurch ein Bild der ersten Codierung mittels der Kamera aufnehmbar ist,
wobei die Auswerteeinheit derart geeignet ausgeführt ist, dass die Auswerteeinheit, insbesondere mittels Auswerten eines aufgenommenen Bildes der ersten Codierung, zeitlich wiederkehrend die Abweichung (s), insbesondere Abstand, der ersten Codierung (X) zur

Blickrichtung der Kamera und/oder zu derjenigen Geraden, welche parallel zur Blickrichtung der Kamera ausgerichtet ist und durch den Mittelpunkt des Bildsensors der Kamera hindurchgeht, und/oder zu einem Bezugspunkt bestimmt, der im Codierbereich liegt und relativ zum Mobilteil unbewegt ist.

Von Vorteil ist dabei, dass die Codierung ihre jeweilige Position im System als Information aufweist und somit mittels der Kamera die Codierung detektierbar, mittels der Auswerteeinheit erkennbar und die Information dekodierbar ist. Darüber hinaus ist für die Feinbestimmung der Position des Mobilteils die Abweichung der Codierung von der Bildmitte bestimmbar. Da der Abstand der Kamera des Mobilteils vom Codierbereich stets konstant ist, insbesondere wegen der Schienenführung, ist die Abweichung im Bild eineindeutig einer Länge zuordenbar, die von demjenigen Punkt, welcher im Codierbereich liegt und in der Bildmitte des aufgenommenen Bildes erscheint, bis zu der ersten Codierung, deren Bild aufgenommen und die von der Auswerteeinheit erkannt wurde, reicht. Durch Addition dieser Länge zu der Position der ersten Codierung ist eine sehr genaue Bestimmung der Position des Mobilteils entlang der Bahnstrecke, insbesondere Schienenstrecke, ausführbar.

Bei einer vorteilhaften Ausgestaltung ist die Auswerteeinheit derart geeignet ausgeführt, dass sie, insbesondere bei konstanter Geschwindigkeit des Mobilteils, die zeitlich wiederkehrend bestimmten Abweichungen, (s) auf unzulässig große Ausreißer überwacht,

insbesondere indem von der Auswerteeinheit, insbesondere auf eine aus den zeitlich wiederkehrend bestimmten Abweichungen (s) bestimmte Regressionsgerade bezogen, das Bestimmtheitsmaß, eine Residuenquadratsumme oder eine totale Quadratsumme auf Überschreitung eines Schwellwertes überwacht wird. Von Vorteil ist dabei, dass zur Verbesserung der Sicherheit des Systems zeitweise ein Test ausführbar ist. Hierbei werden die bestimmten Abstände auf Plausibilität getestet. Dies wird derart ausgeführt, dass bei konstanter Vorbeifahrt des Mobilteils die Abweichung der ersten Codierung zeitlich wiederkehrend bestimmt wird und zu den bestimmten Abweichungswerten mitzugehörigen Zeitpunkten eine Regressionsgerade bestimmt wird. Somit ist zu den bestimmten Abweichungswerten bezogen auf die Regressionsgerade das Bestimmtheitsmaß, die Residuenquadratsumme oder die totale Quadratsumme bestimmbar und auf Überschreitung eines Schwellwertes überwachbar. Auf diese Weise ist erkennbar, ob ein oder mehrere Ausreißer bei den bestimmten Abweichungswerten waren oder nicht. Somit ist die Glaubwürdigkeit der auch vor und nach dem Test bestimmten Abweichungswerte und somit Positionswerte erhöht.

Für den Test ist eine Abdeckung derart vorgesehen, dass im Bild der Kamera nur die erste Codierung erscheint. Somit ist die erwartete zeitliche Veränderung der Abweichung vom der Bildmitte entsprechenden Punkt des Codierbereichs überwachbar auf Ausreißer. Wenn ein Ausreißer auftritt, liegt ein Defekt vor und es ist ein Fehlersignal erzeugbar.

Bei einer vorteilhaften Ausgestaltung ist die Abdeckung einstückig oder mehrstückig aus einem Abdeckelement, insbesondere Blechteil oder Klebeband, zusammengesetzt. Von Vorteil ist dabei, dass im System ein Bereich als Testbereich in einfacher Weise bereit stellbar ist.

Bei einer vorteilhaften Ausgestaltung deckt die Abdeckung nicht nur nächstbenachbarte, sondern auch übernächstbenachbarte Codierungen ab, insbesondere unterbrechungsfrei, insbesondere wobei die Abdeckung die erste Codierung umrandet. Von Vorteil ist dabei, dass der Test ungestört von den anderen Codierungen ausführbar ist. Somit ist eine Verwechslung der Codierungen verhinderbar.

Bei einer vorteilhaften Ausgestaltung ist das Mobilteil ein Schienenfahrzeug, insbesondere ein Einschienenhängebahnfahrzeug,
wobei die Codierfläche sich parallel zu den Schienen erstreckt und die Codierungen in Schienenrichtung hintereinander angeordnet sind. Von Vorteil ist dabei, dass die Codierfläche parallel zu den Schienen verlegt ist und somit in einfacher Weise ein konstanter Abstand zwischen Kamera und Codierfläche erreicht ist. Somit ist die Abweichung des Bildes der ersten Codierung direkt einer Länge in Schienenrichtung proportional.

Bei einer vorteilhaften Ausgestaltung weist jede der Codierungen einen zweidimensionalen Code, insbesondere QR-Code, auf. Von Vorteil ist dabei, dass die Information der Position des Codes codierbar ist und somit das Mobilteil anhand der Detektion des stationär angeordneten Codierbereichs seine Position zu bestimmen in der Lage ist.

Bei einer vorteilhaften Ausgestaltung codiert jede Codierung zumindest ihre Position im System. Von Vorteil ist dabei, dass durch Erkennen und Dekodieren der Codierung die Position des Mobilteils zumindest grob bestimmbar ist.

Wichtige Merkmale bei dem Verfahren zum Betreiben eines Systems sind, dass das System, insbesondere Anlage, ein entlang eines Codierbereichs verfahrbares Mobilteil aufweist,
wobei am Mobilteil eine Kamera angeordnet ist,
wobei der Codierbereich, insbesondere in Fahrrichtung des Mobilteils, hintereinander angeordnete, insbesondere regelmäßig und/oder gleichmäßig voneinander beabstandete Codierungen aufweist,
wobei eine einteilig oder mehrteilig ausgeführte Abdeckung Codierungen, insbesondere zur ersten Codierung benachbarte Codierungen, abdeckt, insbesondere zur Kamera hin abdeckt,
wobei die Abdeckung eine Ausnehmung aufweist, durch welche hindurch zeitlich wiederkehrend jeweils ein Bild der ersten Codierung mittels der Kamera aufgenommen wird, insbesondere wobei das Mobilteil mit konstanter Geschwindigkeit bewegt wird,
wobei mittels Auswerten der aufgenommenen Bilder der ersten Codierung die jeweiligen Abweichungen (s), insbesondere Abstände, der ersten Codierung (X) zur Blickrichtung der Kamera und/oder zu derjenigen Geraden, welche parallel zur Blickrichtung der Kamera ausgerichtet ist und durch den Mittelpunkt des Bildsensors der Kamera hindurchgeht, und/oder zu einem Bezugspunkt bestimmt werden, der im Codierbereich liegt und relativ zum Mobilteil unbewegt ist,
wobei die bestimmten Abweichungen (s) auf einen unzulässig großen Ausreißer überwacht wird,

insbesondere indem, insbesondere auf eine aus den zeitlich wiederkehrend bestimmten Abweichungen (s) bestimmte Regressionsgerade bezogen, das Bestimmtheitsmaß, eine Residuenquadratsumme oder eine totale Quadratsumme auf Überschreitung eines Schwellwertes überwacht wird. Von Vorteil ist dabei, dass eine erhöhte Sicherheit herstellbar ist. Denn durch die Überwachung auf Ausreißer während des Durchführens eines Tests wird die Funktion der Komponenten der Auswerteeinheit überprüfbar und somit die Sicherheit verbessert.

Bei einer vorteilhaften Ausgestaltung wird zusätzlich überwacht, ob die Abweichungen (s) in einem zulässigen Wertebereich liegen. Von Vorteil ist dabei, dass eine die Sicherheit durch einen solchen zusätzlichen Test weiter verbessert wird.

Bei einer vorteilhaften Ausgestaltung weist jede Codierung ihre Position im System als Information auf,
wobei jede Codierung einen ersten Code aufweist, der in einer ersten Farbe codiert wird, und einen zweiten Code, der in einer zweiten Farbe codiert wird,
wobei der erste und der zweite Code jeweils dieselbe Information codieren. Von Vorteil ist dabei, dass schon durch die Erkennung und Dekodierung einer Codierung die Position des Mobilteils grob bestimmbar ist.

Bei einer vorteilhaften Ausgestaltung wird durch ein Leuchtmittel des Mobilteils mit steuerbarer Farbe des ausgestrahlten Lichts des Leuchtmittels in einem ersten Verfahrensschritt der erste Code mittels Beleuchten durch das Leuchtmittel und in einem zweiten Verfahrensschritt der zweite Code mittels Beleuchten durch das Leuchtmittel erkannt und dekodiert,
so, dass die jeweils dekodierten Informationen miteinander verglichen werden und bei Nichtübereinstimmung ein Fehlersignal ausgelöst wird. Von Vorteil ist dabei, dass die Sicherheit weiter verbesserbar ist, indem die Information der Ansteuerung des Leuchtmittels, also die Information der Farbe, und die jeweils dekodierte Information miteinander vergleichbar sind und somit eine weitere Überwachung ausführbar ist.

Weitere Vorteile ergeben sich aus den Unteransprüchen.

Die Erfindung wird nun anhand von schematischen Abbildungen näher erläutert:

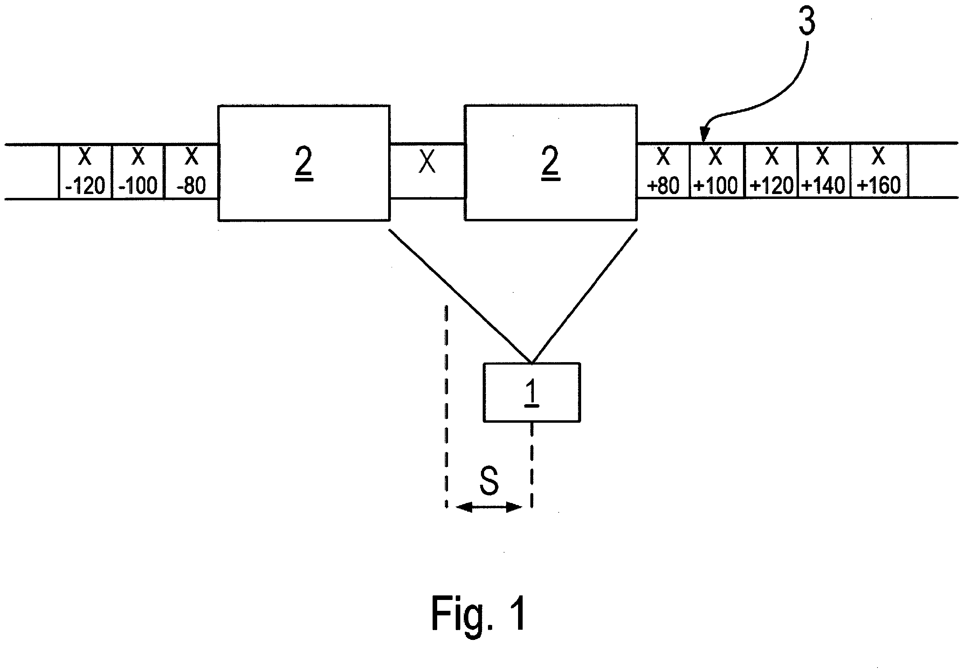

In der Figur 1 ist ein erfindungsgemäßes System schematisch dargestellt.

Wie in Figur 1 dargestellt, bewegt sich ein Mobilteil, welches eine Kamera, insbesondere mit Bildsensor, entlang einer Bahnkurve parallel zu einer langgestreckt ausgeführten Codierfläche.

Vorzugsweise ist das Mobilteil schienengeführt und die Codierfläche 3 parallel zu den Schienen verlegt. Die Bahnkurve ist also parallel zu den Schienen verlaufend.

Die Codierfläche 3 ist aus regelmäßig und/oder gleichmäßig voneinander beabstandeten in Schienenrichtung hintereinander angeordneten Codierungen gebildet. Jede der Codierungen ist gleich groß ausgeführt, insbesondere als QR-Code.

In Figur 1 ist eine erste der Codierungen mit X gekennzeichnet. Jede weitere dargestellte Codierung ist mit ihrem Abstand zu X gekennzeichnet, beispielsweise als "X-80", was einen Abstand von 80 Millimeter zwischen den Schwerpunkten der beiden Codierungen kennzeichnet.

Drei Codierungen vor und drei Codierungen hinter der Codierung X sind abgedeckt mittels eines Abdeckelements 2, wie beispielsweise Blechteil oder Klebeband.

Die Kamera 1 ist am Mobilteil befestigt und weist eine Bildauswerteeinheit zur Auswertung der von der Kamera 1 aufgenommenen Bilder auf. Hierbei wird für die erkannte Codierung X auch die in Schienenrichtung gemessene Abweichung s der Position von X zu derjenigen Position, welche der Bildmitte des von der Kamera aufgenommenen Bildes entspricht.

Bei Vorbeifahrt des Mobilteils mit konstanter Bahngeschwindigkeit wächst also s proportional zurzeit an bis die Codierung X aus dem sensitiven Bereich austritt und dann eine andere Codierung "X+80" erkannt wird, so dass s wieder auf einen negativen Wert springt, von dem an es dann wieder ansteigt.

Die Codierungen des Codierbereichs 3 codieren ihre jeweilige Position in der Anlage selbst. Aus der Decodierung der jeweiligen Codierung und der Bestimmung der Abweichung s ist also die Position des Mobilteils bestimmbar.

Auf diese Weise ist also ein Positionsbestimmungsverfahren ausgeführt. Denn es muss nur zumindest eine Codierung im sensitiven, empfindlichen, Bereich der Kamera detektiert und decodiert werden sowie die zugehörige Abweichung s in Schienenrichtung bestimmt werden, um die Position des Mobilteils entlang der Schienenstrecke zu detektieren.

Dabei ist wichtig, dass die Kamera 1 stets in einem konstanten Abstand zum Codierbereich 3 gehalten wird.

Zur Erhöhung der Sicherheit des Gesamtsystems und der in der beschriebenen Weise vorhandenen Positionsbestimmungssystems wird zeitlich beabstandet ein Test durchgeführt. Durch das in zeitlichen Abständen wiederholte Durchführen solcher Tests wird eine höhere Sicherheitsstufe erreichbar.

Hierzu wird das Mobilteil am Abdeckelement 2 entlang mit konstanter Geschwindigkeit vorbeigefahren, so dass die dabei wiederkehrend bestimmten Werte der Abweichung s, welche zur Codierung X zum jeweiligen Zeitpunkt t gehören, bestimmt werden. Die so bestimmten Tupel (s, t) werden zur Bestimmung einer Regressionsgeraden verwendet und zur Bestimmung der mittleren quadratischen Abweichung der Wertetupel von der Regressionsgeraden.

Bei jedem Test wird die erhaltene mittlere quadratische Abweichung von der Regressionsgeraden überwacht auf einem unzulässig hohen Maß an Abweichung von Null.

Somit ist bei Auftreten von Ausreißern ein sicherheitsgerichtetes Abschalten oder Stoppen des Mobilteils ausführbar.

Weitere sicherheitsverbessernde Maßnahmen, wie Überwachen der bestimmten Werte der Abweichung s auf einen zulässigen Wertebereich, sind zusätzlich ausführbar.

Auch bei der Erkennung der jeweiligen Codierung sind sicherheitsgerichtete Maßnahmen ausführbar: Beispielsweise wird der Codierbereich zuerst mit einem Leuchtmittel einer ersten Farbe beleuchtet und erkannt sowie dekodiert und danach mit einem Leuchtmittel einer zweiten Farbe. Die Ansteuerbefehle für die Beleuchtung sind dann verwendbar zum sicherheitsgerichteten Überwachen der dekodierten Informationen.

Bei weiteren Ausführungsbeispielen wird statt der mittleren quadratischen Abweichung ein Mittelwert verwendet, wie beispielsweise der Mittelwert der Quadrate der Abstände zur Regressionsgeraden oder die Wurzel aus diesem Mittelwert oder mathematisch ähnliche Mittelwerte.

### Bezugszeichenliste

1 Kamera, insbesondere mit Bildsensor, eines Mobilteils
2 Abdeckelement, insbesondere Blechteil oder Klebeband
3 Codierbereich

## Patentansprüche

1. System, insbesondere Anlage, mit entlang eines Codierbereichs verfahrbarem Mobilteil,
wobei am Mobilteil eine Kamera angeordnet ist, die mit einer Auswerteeinheit, insbesondere Bildauswerteeinheit, des Mobilteils verbunden ist,
wobei der Codierbereich, insbesondere in Fahrrichtung des Mobilteils, hintereinander angeordnete, insbesondere regelmäßig und/oder gleichmäßig voneinander beabstandete Codierungen aufweist,
wobei die Auswerteeinheit derart geeignet ausgeführt ist, dass die Auswerteeinheit, insbesondere mittels Auswerten eines aufgenommenen Bildes der ersten Codierung, zeitlich wiederkehrend die Abweichung (s), insbesondere Abstand, der ersten Codierung (X) zur Blickrichtung der Kamera und/oder zu derjenigen Geraden, welche parallel zur Blickrichtung der Kamera ausgerichtet ist und durch den Mittelpunkt des Bildsensors der Kamera hindurchgeht, und/oder zu einem Bezugspunkt bestimmt, der im Codierbereich liegt und relativ zum Mobilteil unbewegt ist,
**dadurch gekennzeichnet, dass**
**eine einteilig oder mehrteilig ausgeführte Abdeckung Codierungen, insbesondere zur ersten Codierung benachbarte Codierungen, abdeckt, insbesondere zur Kamera hin abdeckt,**
**wobei die Abdeckung eine Ausnehmung aufweist, durch welche hindurch ein Bild der ersten Codierung mittels der Kamera aufnehmbar ist.**

2. System **nach Anspruch 1,**
**dadurch gekennzeichnet, dass**
**die Abdeckung einstückig oder mehrstückig aus einem Abdeckelement, insbesondere Blechteil oder Klebeband, zusammengesetzt ist,**
**wobei die Abdeckung die erste Codierung umrandet,**
**wobei jede Codierung ihre Position im System als Information aufweist,**
**wobei jede Codierung einen ersten Code aufweist, der in einer ersten Farbe codiert ist, und einen zweiten Code, der in einer zweiten Farbe codiert ist,**
**wobei der erste und der zweite Code jeweils dieselbe Information codieren,**
**wobei ein Mittel zum Steuern der Farbe des ausgestrahlten Lichts des Leuchtmittels des Mobilteils derart geeignet ausgeführt ist, dass in einem ersten Verfahrensschritt der erste Code mittels Beleuchten durch das Leuchtmittel und in einem zweiten Verfahrensschritt der zweite Code mittels Beleuchten durch das Leuchtmittel erkennbar und dekodierbar ist,**
**wobei ein Vergleichsmittel derart geeignet ausgeführt ist, dass das Vergleichsmittel die jeweils dekodierten Informationen miteinander vergleicht und bei Nichtübereinstimmung ein Fehlersignal auslöst.**

3. System nach Anspruch 1 oder 2,
**dadurch gekennzeichnet, dass**
die Auswerteeinheit derart geeignet ausgeführt ist, dass sie, insbesondere bei konstanter Geschwindigkeit des Mobilteils, die zeitlich wiederkehrend bestimmten Abweichungen, (s) auf unzulässig große Ausreißer überwacht,
insbesondere indem von der Auswerteeinheit, insbesondere auf eine aus den zeitlich wiederkehrend bestimmten Abweichungen (s) bestimmte Regressionsgerade bezogen, das Bestimmtheitsmaß, eine Residuenquadratsumme oder eine totale Quadratsumme auf Überschreitung eines Schwellwertes überwacht wird.

4. System nach einem der vorangegangenen Ansprüche,
**dadurch gekennzeichnet, dass**
die Abdeckung einstückig oder mehrstückig aus einem Abdeckelement, insbesondere Blechteil oder Klebeband, zusammengesetzt ist.

5. System nach einem der vorangegangenen Ansprüche,
**dadurch gekennzeichnet, dass**
die Abdeckung nicht nur nächstbenachbarte, sondern auch übernächstbenachbarte Codierungen abdeckt, insbesondere unterbrechungsfrei.

6. System nach einem der vorangegangenen Ansprüche,
**dadurch gekennzeichnet, dass**
die Abdeckung die erste Codierung umrandet.

7. System nach einem der vorangegangenen Ansprüche,
**dadurch gekennzeichnet, dass**
das Mobilteil ein Schienenfahrzeug ist, insbesondere ein Einschienenhängebahnfahrzeug,
wobei die Codierfläche sich parallel zu den Schienen erstreckt und die Codierungen in Schienenrichtung hintereinander angeordnet sind.

8. System nach einem der vorangegangenen Ansprüche,
**dadurch gekennzeichnet, dass**
jede der Codierungen einen zweidimensionalen Code, insbesondere QR-Code, aufweist.

9. System nach einem der vorangegangenen Ansprüche,
**dadurch gekennzeichnet, dass**
jede Codierung zumindest ihre Position im System codiert.

10. Verfahren zum Betreiben eines Systems, insbesondere nach einem der vorangegangenen Ansprüche,
**wobei** das System, insbesondere Anlage, ein entlang eines Codierbereichs verfahrbares Mobilteil aufweist,
wobei am Mobilteil eine Kamera angeordnet ist,
wobei der Codierbereich, insbesondere in Fahrrichtung des Mobilteils, hintereinander angeordnete, insbesondere regelmäßig und/oder gleichmäßig voneinander beabstandete Codierungen aufweist,
wobei mittels Auswerten der aufgenommenen Bilder der ersten Codierung die jeweiligen Abweichungen (s), insbesondere Abstände, der ersten Codierung (X) zur Blickrichtung der Kamera und/oder zu derjenigen Geraden, welche parallel zur Blickrichtung der Kamera ausgerichtet ist und durch den Mittelpunkt des Bildsensors der Kamera hindurchgeht, und/oder zu einem Bezugspunkt bestimmt werden, der im Codierbereich liegt und relativ zum Mobilteil unbewegt ist,
**dadurch gekennzeichnet, dass**
**eine einteilig oder mehrteilig ausgeführte Abdeckung Codierungen, insbesondere zur ersten Codierung benachbarte Codierungen, abdeckt, insbesondere zur Kamera hin abdeckt,**
**wobei die Abdeckung eine Ausnehmung aufweist, durch welche hindurch zeitlich wiederkehrend jeweils ein Bild der ersten Codierung mittels der Kamera aufgenommen wird,**
**insbesondere wobei das Mobilteil mit konstanter Geschwindigkeit bewegt wird,**
wobei die bestimmten Abweichungen (s) auf einen unzulässig großen Ausreißer überwacht wird,
insbesondere indem, insbesondere auf eine aus den zeitlich wiederkehrend bestimmten Abweichungen (s) bestimmte Regressionsgerade bezogen, das Bestimmtheitsmaß, eine Residuenquadratsumme oder eine totale Quadratsumme auf Überschreitung eines Schwellwertes überwacht wird.

11. Verfahren **nach Anspruch 10,**
**dadurch gekennzeichnet, dass**
**die Abdeckung einstückig oder mehrstückig aus einem Abdeckelement, insbesondere Blechteil oder Klebeband, zusammengesetzt ist,**
**wobei die Abdeckung die erste Codierung umrandet.**

12. Verfahren nach Anspruch 10 oder 11,
**dadurch gekennzeichnet, dass**
zusätzlich überwacht wird, ob die Abweichungen (s) in einem zulässigen Wertebereich liegen.

13. Verfahren nach einem der Ansprüche 10 bis 12,
**dadurch gekennzeichnet, dass**
jede Codierung ihre Position im System als Information aufweist,
wobei jede Codierung einen ersten Code aufweist, der in einer ersten Farbe codiert wird, und einen zweiten Code, der in einer zweiten Farbe codiert wird,
wobei der erste und der zweite Code jeweils dieselbe Information codieren.

14. Verfahren nach einem der Ansprüche 10 bis 13,
**dadurch gekennzeichnet, dass**
durch ein Leuchtmittel des Mobilteils mit steuerbarer Farbe des ausgestrahlten Lichts des Leuchtmittels in einem ersten Verfahrensschritt der erste Code mittels Beleuchten durch das Leuchtmittel und in einem zweiten Verfahrensschritt der zweite Code mittels Beleuchten durch das Leuchtmittel erkannt und dekodiert wird,
insbesondere so, dass die jeweils dekodierten Informationen miteinander verglichen werden und bei Nichtübereinstimmung ein Fehlersignal ausgelöst wird.

## Claims

1. System, in particular a facility, comprising a mobile component that can move along an encoding region,
a camera being arranged on the mobile component, which camera is connected to an analysis unit, in particular an image analysis unit, of the mobile component,
the encoding region having encodings, in particular in the direction of travel of the mobile component, which are arranged one behind the other, in particular so as to be spaced apart from one another regularly and/or uniformly,
the analysis unit being suitably configured such that the analysis unit determines, recurrently over time, in particular by way of evaluating an image taken of the first encoding, the deviation (s), in particular the distance, of the first encoding (X) from the viewing direction of the camera and/or from the straight line that is oriented in parallel with the viewing direction of the camera and passes through the centre of the image sensor of the camera and/or from a reference point that is located in the encoding region and is stationary relative to the mobile component,
**characterised in that**
a cover configured in one part or multiple parts covers encodings, in particular encodings adjacent to the first encoding, in particular covers them towards the camera,
the cover having an opening through which an image of the first encoding can be taken by means of the camera.

2. System according to claim 1,
**characterised in that**
the cover is composed, either in one piece or in multiple pieces, of a covering element, in particular a sheet part or adhesive tape,
the cover forming a border around the first encoding,
each encoding comprising its position in the system as information,
each encoding having a first code encoded in a first colour and a second code encoded in a second colour,
the first and the second code each encoding the same information,
a means for controlling the colour of the light emitted from the lamp of the mobile component being suitably configured such that, in a first method step, the first code can be recognised and decoded by means of illumination by the lamp and, in a second method step, the second code can be recognised and decoded by means of illumination by the lamp,
a comparison means being suitably configured such that the comparison means compares each piece of decoded information and triggers a fault signal if they do not match.

3. System according to claim 1 or claim 2,
**characterised in that**
the analysis unit is suitably configured such that it monitors the deviations (s), determined recurrently over time, for impermissibly large outliers, in particular when the mobile component is travelling at a constant velocity,
in particular by the analysis unit monitoring the coefficient of determination, a residual sum of squares or a total sum of squares to check if it exceeds a threshold value, in particular in relation to a line of regression determined from the deviation (s) determined recurrently over time.

4. System according to any of the preceding claims,
**characterised in that**
the cover is composed, either in one piece or in multiple pieces, of a covering element, in particular a sheet part or adhesive tape.

5. System according to any of the preceding claims,
**characterised in that**
the cover covers not only the nearest neighbour encodings, but also the next-nearest neighbour encodings, in particular without any discontinuity.

6. System according to any of the preceding claims,
**characterised in that**
the cover forms a border around the first encoding.

7. System according to any of the preceding claims,
**characterised in that**
the mobile component is a rail-borne vehicle, in particular an overhead monorail conveyor, the encoding surface extending in parallel with the rails, and the encodings being arranged one behind the other in the direction of the rails.

8. System according to any of the preceding claims,
**characterised in that**
each of the encodings has a two-dimensional code, in particular a QR code.

9. System according to any of the preceding claims,
**characterised in that**
each encoding encodes at least its position in the system.

10. Method for operating a system, in particular according to any of the preceding claims, the system, in particular a facility, having a mobile component that can move along an encoding region,
a camera being arranged on the mobile component,
the encoding region having encodings, in particular in the direction of travel of the mobile component, which are arranged one behind the other, in particular so as to be spaced apart from one another regularly and/or uniformly,
the relevant deviations (s), in particular the distances, of the first encoding (X) from the viewing direction of the camera and/or from the straight line that is oriented in parallel with the viewing direction of the camera and passes through the centre of the image sensor of the camera and/or from a reference point that is located in the encoding region and is stationary relative to the mobile component being determined by way of evaluating the images taken of the first encoding,
**characterised in that**
a cover configured in one part or in multiple parts covers encodings, in particular encodings adjacent to the first encoding, in particular covers them towards the camera,
the cover having an opening through which an image of the first encoding is taken by means of the camera recurrently over time,
the mobile component in particular being moved at a constant velocity,
the determined deviations (s) being monitored for impermissibly large outliers,
in particular by monitoring the coefficient of determination, a residual sum of squares or a total sum of squares to check if it exceeds a threshold value, in particular in relation to a line of regression determined from the deviations (s) determined recurrently over time.

11. Method according to claim 10,
**characterised in that**
the cover is composed, either in one piece or in multiple pieces, of a covering element, in particular a sheet part or adhesive tape,
the cover forming a border around the first encoding.

12. Method according to claim 10 or claim 11,
**characterised in that**
it is additionally monitored whether the deviations (s) are within a permitted value range.

13. Method according to any of claims 10 to 12,
**characterised in that**
each encoding comprises its position in the system as information,
each encoding having a first code encoded in a first colour and a second code encoded in a second colour,
the first and the second code each encoding the same information.

14. Method according to any of claims 10 to 13,
**characterised in that**
using a lamp of the mobile component having a controllable colour of the light emitted from the lamp, in a first method step the first code is recognised and decoded by means of illumination by the lamp, and in a second method step the second code is recognised and decoded by means of illumination by the lamp,
in particular such that each piece of decoded information is compared and a fault signal is triggered if they do not match.

## Revendications

1. Système, en particulier une installation, comprenant une partie mobile qui peut se déplacer le long d'une région de codage,
une caméra étant agencée au niveau de la partie mobile, qui est connectée à une unité d'évaluation, en particulier une unité d'évaluation d'image, de la partie mobile,
la région de codage, en particulier dans une direction de déplacement de la partie mobile, présentant des codages disposés successivement, en particulier uniformément et/ou de manière égale,
l'unité d'évaluation étant conçue de manière appropriée de sorte que l'unité d'évaluation, en particulier au moyen d'une évaluation d'une image prise du premier codage, détermine périodiquement l'écart (s), en particulier la distance, du premier codage (X) par rapport à la direction de visualisation de la caméra et/ou par rapport à la droite qui est parallèle à la direction de visualisation de la caméra et passe à travers le point central du capteur d'image de la caméra, et/ou à un point de référence qui se trouve dans la région de codage et qui est immobile par rapport à la partie mobile,
**caractérisé en ce que**
un couvercle réalisé en une ou plusieurs parties recouvre des codages, en particulier des codages adjacents au premier codage, en particulier vers la caméra,
le couvercle présentant une ouverture à travers laquelle une image du premier codage peut être prise au moyen de la caméra.

2. Système selon la revendication 1,
**caractérisé en ce que**
le couvercle est assemblé d'un seul tenant ou en plusieurs parties à partir d'un élément de recouvrement, en particulier d'une pièce en tôle ou d'un ruban adhésif,
le couvercle entourant le premier codage,
chaque codage présentant sa position dans le système en tant qu'information,
chaque codage présentant un premier code qui est codé dans une première couleur et un second code qui est codé dans une seconde couleur,
les premier et second codes codant chacun la même information,
dans lequel un moyen pour commander la couleur de la lumière émise par le moyen d'éclairage de la partie mobile est réalisé de telle sorte que dans une première étape de procédé, le premier code peut être reconnu et décodé par l'éclairage via le moyen d'éclairage et dans une seconde étape de procédé, le second code peut être reconnu et décodé par l'éclairage via le moyen d'éclairage,
un moyen de comparaison étant réalisé de manière appropriée, de telle sorte que le moyen de comparaison compare les informations respectivement décodées les unes avec les autres et déclenche un signal d'erreur en cas de non-conformité.

3. Système selon la revendication 1 ou 2,
**caractérisé en ce que**
l'unité d'évaluation est réalisée de manière appropriée de manière, en particulier à une vitesse constante de la partie mobile, à surveiller les écarts déterminés de manière périodique, (s) à la recherche de valeurs aberrantes de taille inadmissibles,
en particulier via l'unité d'évaluation, en particulier par rapport à une droite de régression déterminée à partir des écarts déterminés de manière périodique (s), la mesure de détermination, une somme quadratique résiduelle ou une somme quadratique totale est surveillée pour le dépassement d'une valeur de seuil.

4. Système selon l'une quelconque des revendications précédentes,
**caractérisé en ce que**
le couvercle est assemblé d'un seul tenant ou en plusieurs parties à partir d'un élément de recouvrement, en particulier d'une pièce en tôle ou d'un ruban adhésif.

5. Système selon l'une quelconque des revendications précédentes,
**caractérisé en ce que**
la couverture recouvre non seulement des codages voisins, mais aussi des codages voisins suivants, en particulier sans interruption.

6. Système selon l'une quelconque des revendications précédentes,
**caractérisé en ce que**
le couvercle entoure le premier codage.

7. Système selon l'une quelconque des revendications précédentes,
**caractérisé en ce que**
la partie mobile est un véhicule sur rails, en particulier un véhicule monorail sur rails, la surface de codage s'étendant parallèlement aux rails et les codages étant agencés successivement dans la direction des rails.

8. Système selon l'une quelconque des revendications précédentes,
**caractérisé en ce que**
chacun des codages présente un code bidimensionnel, en particulier un code QR.

9. Système selon l'une quelconque des revendications précédentes,
**caractérisé en ce que**
chaque codage code au moins sa position dans le système.

10. Procédé pour faire fonctionner un système, en particulier selon l'une quelconque des revendications précédentes,
le système, en particulier l'installation, présentant une partie mobile le long d'une région de codage,
une caméra étant agencée au niveau de la partie mobile,
la région de codage, en particulier dans une direction de déplacement de la partie mobile, présentant des codages disposés successivement, en particulier uniformément et/ou de manière égale,
au moyen d'une évaluation d'une image prise du premier codage, les écart (s) respectifs, en particulier les distances, du premier codage (X) par rapport à la direction de visualisation de la caméra et/ou par rapport à la droite qui est parallèle à la direction de visualisation de la caméra et passe à travers le point central du capteur d'image de la caméra, et/ou à un point de référence qui se trouve dans la région de codage et qui est immobile par rapport à la partie mobile étant déterminés,
**caractérisé en ce que**
un couvercle réalisé en une ou plusieurs parties recouvre des codages, en particulier des codages adjacents au premier codage, en particulier vers la caméra,
le couvercle présentant une ouverture à travers laquelle une image du premier codage est prise au moyen de la caméra de manière périodique,
en particulier, la partie mobile se déplaçant à une vitesse constante,
les écarts déterminés (s) étant surveillés pour une valeur aberrante de taille inadmissible,
en particulier où, en particulier par rapport à une droite de régression déterminée à partir des écarts déterminés de manière périodique (s), la mesure de détermination, une somme quadratique résiduelle ou une somme quadratique totale est surveillée pour le dépassement d'une valeur de seuil.

11. Procédé selon la revendication 10,
**caractérisé en ce que**
le couvercle est assemblé d'un seul tenant ou en plusieurs parties à partir d'un élément de recouvrement, en particulier d'une pièce en tôle ou d'un ruban adhésif,
le couvercle entourant le premier codage.

12. Procédé selon la revendication 10 ou 11,
**caractérisé en ce que**
le fait que les écarts (s) se situent ou non dans une plage de valeurs admissible fait en outre l'objet d'une surveillance.

13. Procédé selon l'une quelconque des revendications 10 à 12,
**caractérisé en ce que**
chaque codage présente sa position dans le système en tant qu'information,
chaque codage présente un premier code qui est codé dans une première couleur et un second code qui est codé dans une seconde couleur,
les premier et second codes codent chacun la même information.

14. Procédé selon l'une quelconque des revendications 10 à 13,
**caractérisé en ce que**
via un moyen d'éclairage de la partie mobile, la couleur de la lumière émise par le moyen d'éclairage pouvant être commandée, dans une première étape de procédé, le premier code est reconnu et décodé par éclairage via le moyen d'éclairage et, dans une seconde étape de procédé, le seconde code est reconnu et décodé par éclairage via le moyen d'éclairage,
en particulier, de manière à ce que les informations décodées respectives soient comparées les unes aux autres et qu'un signal d'erreur soit déclenché en cas de non-conformité.
